# EUROPÄISCHE PATENTANMELDUNG

(11) **EP 1 580 413 A1**
(43) Veröffentlichungstag der Anmeldung: **28.09.2005**
(21) Anmeldenummer: 05005723.1
(22) Anmeldetag: 16.03.2005
(51) Int. Cl.: F01N 11/00, B01D 35/143

(54) **Vorrichtung zur Überwachung eines Filters, sowie Verfahren zur Filterüberwachung**

(30) Priorität: 24.03.2004 DE 102004014848; 23.02.2005 DE 102005008601
(71) Anmelder: Behr GmbH & Co. KG, 70469 Stuttgart (DE)
(72) Erfinder: Baruschke, Wilhelm, Dipl.-Ing., 73117 Wangen (DE); Boschert, Björn, 71254 Ditzingen (DE); Liermann, Andreas, Dipl.-Ing. (FH), 67117 Limburgerhof (DE); Lochmahr, Karl, Dipl.-Ing. (FH), 71665 Vaihingen/Enz (DE); Rinckleb, Tilo, 71732 Tamm (DE)
(74) Vertreter: Grauel, Andreas

(57) **Zusammenfassung**

Die Erfindung betrifft eine Vorrichtung (10) zur Überwachung eines Filters, die einen in einem Luftkanal (2) angeordneten Filter (3) überwacht, wobei die Vorrichtung eine chemische Überwachungseinheit (7) und/oder eine physikalische Überwachungseinheit umfasst, sowie ein Verfahren zur Überwachung eines Filters (3) mit einer solchen Vorrichtung (10).

## Beschreibung

Die Erfindung betrifft eine Vorrichtung zur Überwachung eines Filters, insbesondere für ein Belüftungssystem eines Kraftfahrzeugs, gemäß dem Oberbegriff des Anspruchs 1.

Eine Filteranlage mit Filtereinbauüberwachung ist aus der EP 1 143 232 A1 bekannt. Hierbei wird der Filter mittels einer Differenzdruck-Messanordnung, welche zur Erkennung eines fehlerhaften oder fehlerhaft eingebauten Filterelements in einem Leitungssystem dient, überwacht. Dabei ist das Filterelement dichtend zwischen die Rohseite und die Reinseite eingebracht. Auf der Rohseite ist eine erste Druckaufnahmeeinheit und auf der Reinseite ist eine zweite Druckaufnahmeeinheit angeordnet. Beide Druckaufnahmeeinheiten sind mit einer Auswertungseinheit verbunden. In der Auswertungseinheit wird der Differenzdruck zwischen der Rohseite und der Reinseite ermittelt und mit einem Mindest-Referenz-Druckwert verglichen. Sobald der ermittelte Differenzdruck geringer ist als der Mindest-Referenz-Druckwert, erfolgt eine Aktion der Auswertungseinheit.

Derartige Vorrichtungen zur Überwachung eines Filters, insbesondere dessen Beladezustands, lassen jedoch noch Wünsche offen.

Es ist Aufgabe der Erfindung, eine verbesserte Vorrichtung zur Überwachung eines Filters zur Verfügung zu stellen.

Diese Aufgabe wird gelöst durch eine Vorrichtung zur Überwachung eines Filters mit den Merkmalen des Anspruchs 1. Vorteilhafte Ausgestaltungen sind Gegenstand der Unteransprüche.

Erfindungsgemäß ist eine Vorrichtung zur Überwachung eines Filters vorgesehen, die einen in einem Luftkanal, insbesondere einer Kraftfahrzeug-Klimaanlage, angeordneten Filter überwacht, und die eine chemische Überwachungseinheit umfasst, welche chemische Messwerte, beispielsweise die Konzentration eines bestimmten Stoffes, ermittelt und auswertet. Zur Ermittlung der Messwerte ist bevorzugt mindestens ein Sensor, insbesondere zur Konzentrationsmessung einer Leitsubstanz, insbesondere bevorzugt von Kohlenwasserstoffen, vorgesehen. Derartige Sensoren sind mittlerweile sehr preiswert, so dass eine bessere und kostengünstigere Möglichkeit zur Verfügung steht als durch die bekannte Messung der entsprechenden Drücke vor und hinter dem Filter. Bevorzugt werden als Leitsubstanzen organische oder Anorganische Stoffe oder Verbindungen wie Kohlenwasserstoffe oder Stickoxide verwendet.

Vorzugsweise ist in Luftströmungsrichtung gesehen ein Sensor vor und ein Sensor nach dem Filter angeordnet. Alternativ kann auch auf andere Weise die strömende Luft vor dem Filter und nach dem Filter beispielsweise abwechselnd über einen Bypass oder Leitungen einem einzigen Sensor zugeführt werden, der die Leitsubstanz-Konzentration misst und den Messwert an eine Auswerteelektronik weiterleitet. Die Auswerteelektronik überwacht den Zustand des Filters und gibt gegebenenfalls ein Signal, dass ein Filterwechsel erforderlich ist.

Bevorzugt ist eine Entnahme- oder Messstelle für die chemische Überwachungseinheit im Frischluftkanal und/oder im Luftkanal nach einem Gebläse und vor dem Filter angeordnet.

Vorzugsweise ist eine Entnahme- oder Messstelle für die chemische Überwachungseinheit nach dem Filter, beispielsweise zwischen zwei Messstellen zur Ermittlung der Strömungsgeschwindigkeit der Luft im Luftkanal angeordnet.

Die Vorrichtung umfasst bevorzugt den in dem Luftkanal angeordneten Filter, welcher auch aus einem Aktivkohle-Filter und/oder einem Partikelfilter und/oder anderen Filtern bestehen kann, sowie eine physikalische Überwachungseinheit und eine chemisch Überwachungseinheit, welche mindestens einen Sensor zur Konzentrationsmessung einer Leitsubstanz, sowie mindestens eine Auswerteelektronik für die Überwachungseinheiten aufweist.

Die physikalische Überwachungseinheit überwacht bevorzugt die Strömungsgeschwindigkeit der Luft im Luftkanal nach dem Filter und/oder die Druckdifferenz zwischen einem Messpunkt vor dem Filter und einem Messpunkt hinter dem Filter, um den Beladungszustand insbesondere eines Partikelfilters zu überwachen.

Die Entnahme- oder Messstellen für den Sensor zur Konzentrationsmessung einer Leitsubstanz sind bevorzugt an in Luftströmungsrichtung hintereinander liegenden Stellen angeordnet.

Zumindest eine nach dem Filter angeordnete Entnahme- oder Messstelle für den Sensor zur Konzentrationsmessung einer Leitsubstanz ist bevorzugt nach außen versetzt im Luftkanal angeordnet. Da die Beladung eines Partikelfilters in der Regel von der Mitte her erfolgt, ist auch bei einem relativ stark beladenen Partikelfilter außermittig die Luftströmung noch ausreichend, so dass die Konzentrationsmessung einer Leitsubstanz nicht beeinträchtigt wird, auch wenn neben dem eigentlich zu überwachenden Filter, wie einem Aktivkohle-Filter, einem Partikelfilter oder einer Kombination dieser Filter noch ein weiterer Filter vorgesehen ist.

Aus genau diesem Grund ist vorzugsweise eine Messstelle zur Ermittlung der Strömungsgeschwindigkeit der Luft im Luftkanal mittig und eine zweite Messstelle zur Ermittlung der Strömungsgeschwindigkeit der Luft im Luftkanal nach außen versetzt angeordnet, so dass der Beladungszustand des Partikelfilters durch eine einfache Vergleichsmessung überwacht werden kann. Die Messstellen sind hierbei bevorzugt in der gleichen Höhe des Luftkanals angeordnet. Im Bereich der Messstellen, insbesondere zwischen Filter und Messstellen oder direkt hinter den Messstellen, sollten keine Anordnungen sein, welche die Strömungsgeschwindigkeit der Luft beeinflussen und verfälschen können.

Bevorzugt ist genau eine Auswerteelektronik für die physikalische Überwachungseinheit und die chemisch Überwachungseinheit zusammen vorgesehen. Hierbei kann es sich auch um eine intelligente, lernfähige Elektronik handeln.

Ein weiterer Gegenstand der Erfindung ist eine Belüftungs-, Heizungs- und/oder Klimaanlage für ein Kraftfahrzeug mit einer erfindungsgemäßen Vorrichtung zur Überwachung eines Filters.

Vorteilhafterweise umfasst die Belüftungs-, Heizungs- und/oder Klimaanlage zumindest eines der folgenden Bauteile: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden wird die Erfindung anhand mehrerer Ausführungsbeispiele unter Bezugnahme auf die Zeichnung im Einzelnen erläutert. Es zeigt:
- Fig. 1: eine schematische Darstellung des ersten Ausführungsbeispiels,
- Fig. 2: eine schematische Darstellung des zweiten Ausführungsbeispiels,
- Fig. 3: eine schematische Darstellung des dritten Ausführungsbeispiels, und
- Fig. 4: ein Diagramm, das die Leitgaskonzentration über der Zeit einer Entnahme- oder Messstelle vor dem Filter und einer Entnahme- oder Messstelle hinter dem Filter bei drei unterschiedlichen Beladungszuständen beispielhaft verdeutlicht.

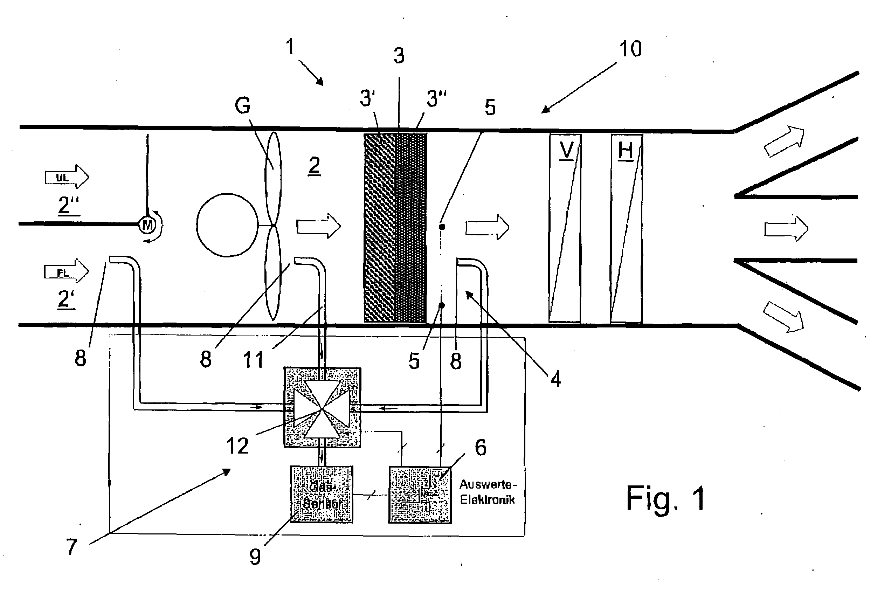

Die Fig. 1 zeigt eine Filteranordnung 1 gemäß dem ersten Ausführungsbeispiel, die in einem Luftkanal 2 einer ausschnittsweise und stark schematisiert dargestellten Kraftfahrzeug-Klimaanlage angeordnet ist. Hierbei wird durch einen Frischluftkanal 2' Frischluft und/oder einen Umluftkanal 2" Umluft durch ein Gebläse G angesaugt und anschließend durch einen Filter 3, bestehend aus einem Partikelfilter 3' und einem Aktivkohle-Filter 3", den Verdampfer V und gegebenenfalls den Heizkörper H geleitet, bevor die temperierte Luft dem Fahrzeuginnenraum zugeführt wird.

Die Filteranordnung 1 weist den Filter 3, eine erste, physikalische Überwachungseinheit 4 mit vorliegend zwei Messstellen 5 für die Strömungsgeschwindigkeit der Luft nach dem Filter 3, eine Auswerteelektronik 6, eine zweite, chemische Überwachungseinheit 7 mit drei Entnahme- oder Messstellen 8 und einem Gas-Sensor 9 auf. Die Auswerteelektronik 6 dient vorliegend sowohl zur Auswertung der Messwerte der ersten, physikalischen Überwachungseinheit 4, d.h. den Strömungsgeschwindigkeit der Luft an den Messstellen 5, als auch der zweiten, chemischen Überwachungseinheit 7, d.h. der Leitwertkonzentration an den Entnahme- oder Messstellen 8. Hierbei bilden die erste, physikalische Überwachungseinheit 4 und die zweite, chemische Überwachungseinheit 7 samt Auswerteelektronik 6 gemeinsam eine erfindungsgemäße Vorrichtung 10 zur Überwachung des Filters 3.

Die Messstellen 5 zur Überwachung der Strömungsgeschwindigkeit der Luft sind nach dem Filter 3 im Luftkanal 2 angeordnet. Vorliegend ist eine Messstelle 5 etwa mittig im Luftkanal 2 und die andere Messstelle 5 nach außen versetzt, angeordnet. Die an den Messstellen 5 vorgesehenen Sensoren zur Ermittlung der Strömungsgeschwindigkeit der Luft sind mit der Auswerteelektronik 6 verbunden, welche die Messwerte auswertet. Da die Beladung des Partikelfilters 3" in der Regel ungleichmäßig über die Querschnittsfläche erfolgt, sind divergierende Strömungsgeschwindigkeiten der Luft bei Langzeitmessungen ein Maßstab für die Partikelfilter-Beladung. Da hierbei nur die Differenz der Messwerte relevant ist, ist die Anforderung an die Messgenauigkeit der einzelnen Sensoren relativ gering, von Vorteil ist aber eine ähnliche Toleranzabweichung der Sensoren, was beispielsweise durch die Wahl zweier Sensoren aus der gleichen Charge oder durch Selektion erfolgen kann.

Je nach Ausgestaltung kann bei einer hohen Beladung des Partikelfilters 3" nur dieser oder der gesamte Filter 3 ausgetauscht werden.

Die Entnahme- oder Messstellen 8 der zweiten, chemischen Überwachungseinheit 7 sind im Endbereich des Frischluftkanals 2', im Luftkanal 2 vor und nach dem Filter 3 angeordnet, wobei es sich bei den Entnahme- oder Messstellen 8 um Entnahmestellen handelt, von denen aus über Leitungen 11 und ein Mehrwegeventil 12 ein Teil der Luft zu einer Messkammer geführt werden kann, in der die Leitgas-Konzentration mit Hilfe des Gas-Sensors 9 gemessen und der Messwert mit Hilfe der Auswerteelektronik 6 unter Vergleich mit einer Mehrzahl anderer Messwerte, insbesondere den Messwerten an den anderen Messstellen 8, ausgewertet wird. Die Messungen erfolgen vorliegend in regelmäßigen Abständen und abwechselnd an den einzelnen Entnahme- oder Messstellen 8.

Bei dem Gas-Sensor 9 handelt es sich gemäß dem Ausführungsbeispiel um einen Kohlenwasserstoff-Sensvr, welcher den Kohlenwasserstoff-Gehalt des Luftstroms misst. Die Konzentrationen des Kohlenwasserstoff-Gehalts an den Entnahme- oder Messstellen 8 werden mittels der Auswerteelektronik 6 verglichen. Wenn die Differenz der Konzentrationen einen Grenzwert überschreitet, wird ein Signal zum Filtertausch gegeben, was beispielsweise mittels einer Kontrolllampe am Armaturenbrett des Kraftfahrzeugs erfolgen kann. Je nach Ausgestaltung kann bei einer hohen Beladung des AktivkohleFilters 3" nur dieser oder der gesamte Filter 3 ausgetauscht werden.

Als Filter 3 werden gemäß dem Ausführungsbeispiel ein Partikel-Filter 3' und ein Aktivkohle-Filter 3" verwendet, jedoch können auch andere Filter, beispielsweise mit organischen oder anorganischen Sorbentien, verwendet werden.

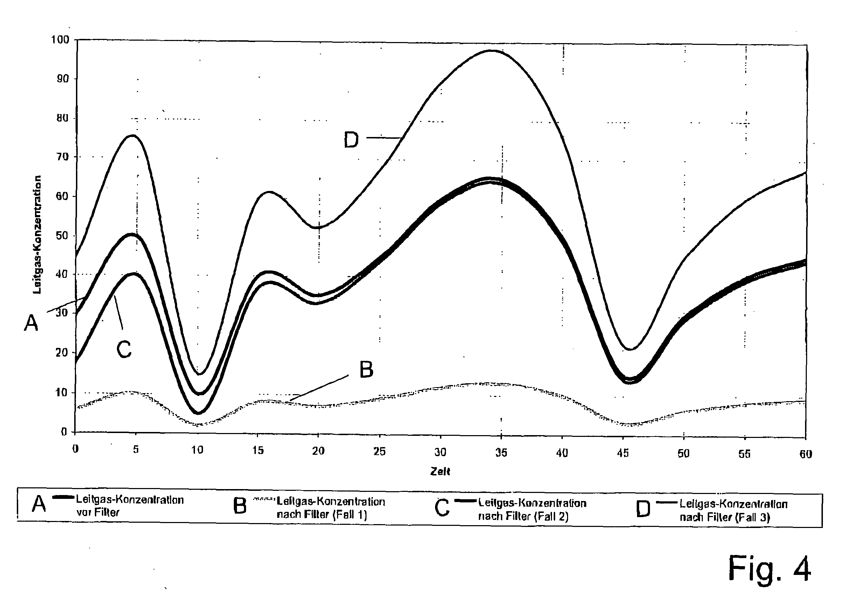

In Fig. 4 ist schematisch ein Diagramm der Leitgas-Konzentrationen vor und nach dem Filter 3 für verschiedene (chemische) Beladungszustände über der Zeit dargestellt. Hierbei zeigt die mit A markierte Kurve die Leitgas-Konzentration vor dem Filter 3, die mit B markierte Kurve die Leitgas-Konzentration nach dem Filter 3 in einem ersten Fall, die mit C markierte Kurve die Leitgas-Konzentration nach dem Filter 3 in einem zweiten Fall und die mit D markierte Kurve die Leitgas-Konzentration nach dem Filter 3 in einem dritten Fall.

Fall 1 (Kurve B) betrifft den Fall eines neuwertigen Filters, d.h. die Leitgas-Konzentration nach dem Filter 3 liegt erheblich unter derjenigen vor dem Filter 3.

Fall 2 (Kurve C) betrifft den Fall eines "vollen" Filters, d.h. der Leitgas-Konzentrationsverlauf vor und nach dem Filter 3 ist nahezu deckungsgleich über einen längeren Zeitraum hinweg.

Fall 3 (Kurve D) betrifft den Fall, in dem eine höhere Leitgas-Konzentration nach dem Filter 3 als vor dem Filter 3 herrscht, beispielsweise auf Grund der Verdrängung des gebundenen Leitgases aus dem Filter 3 durch eine höher siedende Substanz. Um dies zu verhindern, sollte als Leitgas stets eine möglichst hoch siedende und schwer vom Filter 3 zu verdrängende Substanz gewählt werden, die außerdem in ausreichender Konzentration in der Luft vorhanden ist. Findet dennoch eine Verdrängung des Leitgases aus dem Filter 3 statt, so kann dies durch die Auswerteelektronik 6 mit Hilfe einer entsprechenden Rechenvorschrift entsprechend bewertet und in der Abschätzung der chemischen Filterbeladung berücksichtigt werden.

Bei der Auswertung müssen neben der möglichen Verdrängung des Leitgases aus dem Filter auch kurzfristige Spitzen der Leitgas-Konzentration, die auf Grund der Fahrzeugdynamik auftreten können, gefiltert werden, so dass die Auswertung in erster Linie auf längerfristigen Messsignalverläufen basiert.

Bei der Auswerteelektronik 6 kann es sich gegebenenfalls auch um eine lemfähige Elektronik handeln, die bei Einbau verschiedene feste und verschiedene abänderbare Grenzwerte vorgegeben hat, und bei der die abänderbaren Grenzwerte über die Zeit optimiert werden, so dass unter Umständen die Zahl oder Frequenz der Messungen verringert werden kann und Voraussagen, wann ein Filter voraussichtlich zu wechseln ist, verbessert werden können.

Die Festlegung von Grenzwerten für die chemische und/oder physikalische Filterbeurteilung kann durch Tests erfolgen.

Alternativ zur Ermittlung der Strömungsgeschwindigkeit der Luft (erste, physikalische Überwachungseinheit) an zwei Messstellen 5 kann auch nur ein Sensor zur Messung der Strömungsgeschwindigkeit vorgesehen sein, welcher variabel platzierbar ist. In diesem Fall ist eine entsprechende Verstellvorrichtung für den Sensor erforderlich. Dadurch, dass nur ein Sensor verwendet wird, reduziert sich die erforderliche absolute Messgenauigkeit des Sensors, so dass kostengünstigere Sensoren verwendet werden können.

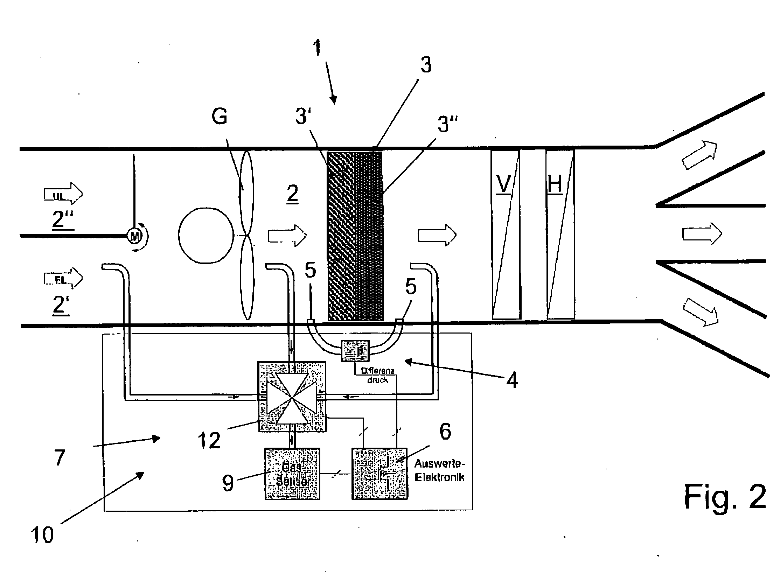

Gemäß dem zweiten, in Fig. 2 dargestellten Ausführungsbeispiel wird bei der ersten, physikalischen Überwachungseinheit 4 der Druckabfall im Luftkanal 2 zwischen Messstellen 5 vor und nach dem Filter 3 gemessen. Die zweite, chemische Überwachungseinheit 7 ist entsprechend der des ersten Ausführungsbeispiels ausgebildet. Der Druckabfall im Luftkanal 2 zwischen den Messstellen 5 ist ein Maß für den Beladungszustand des Partikelfilters 3'.

Alternativ zur Differenzdruckmessung ist auch die Messung von einzelnen Drücken und das Vergleichen derselben möglich, wofür an den Messstellen, welche beispielsweise den Messstellen des zweiten Ausführungsbeispiels entsprechen können, Drucksensoren angeordnet sind. Hierbei ist der Differenzdruck zwischen den Messstellen ein Maß für den Beladungszustand des Partikelfilters.

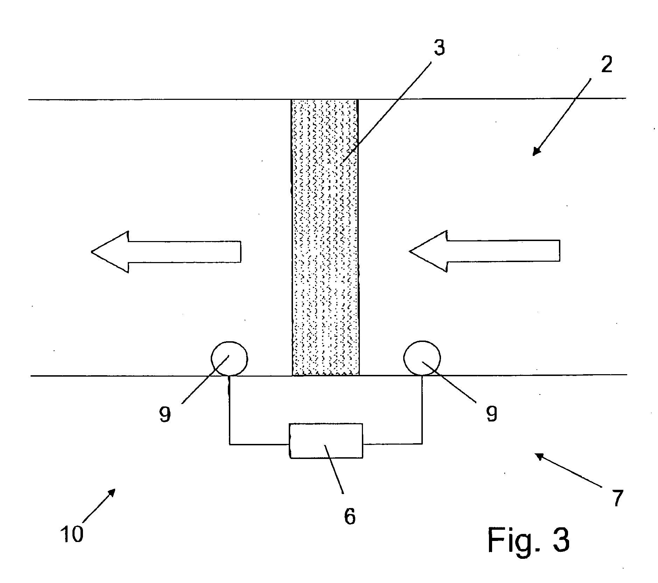

Fig. 3 zeigt eine Filteranordnung 1 gemäß dem dritten Ausführungsbeispiel, die in einem Luftkanal 2 eines Kraftfahrzeug-Belüftungssystems angeordnet ist. Die Filteranordnung 1 weist einen Filter 3, zwei Sensoren 9, wobei ein Sensor 9a in Luftströmungsrichtung gesehen vor dem Filter 3 und ein Sensor 9b nach dem Filter 3 angeordnet ist, sowie eine Auswerteelektronik 6 auf. Hierbei bilden die Sensoren 9 und die Auswerteelektronik 6 eine chemische Überwachungseinheit 7, welche den Zustand des Filters 3 laufend überwacht. Im Unterschied zu den zuvor beschriebenen Ausführungsbeispielen ist hierbei keine abgetrennt ausgebildete Messkammer vorgesehen, sondem die Messungen erfolgen direkt an den Messstellen im Luftkanal 2.

Bei den Sensoren 9 handelt es sich gemäß dem Ausführungsbeispiel um Kohlenwasserstoff-Sensoren, welche den Kohlenwasserstoff-Gehalt des Luftstroms messen. Die Konzentrationen werden mittels der Auswerteelektronik 6 verglichen. Wenn die Differenz der Konzentrationen einen Grenzwert überschreitet, wird ein Signal zum Filtertausch gegeben, was beispielsweise mittels einer Kontrolllampe am Armaturenbrett des Kraftfahrzeugs erfolgen kann.

Als Filter 3 wird gemäß dem Ausführungsbeispiel ein Aktivkohle-Filter verwendet, jedoch können auch andere Filter mit organischen oder anorganischen Sorbentien verwendet werden.

Gemäß einem weiteren, nicht in der Zeichnung dargestellten Ausführungsbeispiel ist ein Bypass zum Luftkanal vorgesehen, in dem ein den Sensoren 9 des dritten Ausführungsbeispiels entsprechender Sensor angeordnet ist, wobei dem Sensor abwechselnd Luft von vor dem Filter und nach dem Filter zugeführt und der Kohlenwasserstoff-Gehalt der Luft aus den beiden Entnahmestellen verglichen wird. Zur Auswertung ist wiederum eine Auswerteelektronik vorgesehen, deren Funktion derjenigen des dritten Ausführungsbeispiels entspricht.

Die erfindungsgemäße Vorrichtung kann auch ausschließlich zur Einzel-Überwachung von Partikelfiltern, Aktivkohle-Filtern oder anderen Filtern oder anderen Fliterkombinationen dienen.

### Bezugszeichenliste

- 1: Filteranordnung
- 2: Luftkanal
- 2': Frischluftkanal
- 2": Umluftkanal
- 3: Filter
- 3': Partikelfilter
- 3": Aktivkohle-Filter
- 4: erste, physikalische Überwachungseinheit
- 5: Messstelle (physikalisch)
- 6: Auswerteelektronik
- 7: zweite, chemische Überwachungseinheit
- 8: Entnahme- oder Messstelle (chemisch)
- 9: Gas-Sensor
- 10: Vorrichtung
- 11: Leitung
- 12: Mehrwegeventil
- G: Gebläse
- H: Heizkörper
- V: Verdampfer

## Patentansprüche

1. Vorrichtung zur Überwachung eines Filters, die einen in einem Luftkanal (2) angeordneten Filter (3) überwacht, **dadurch gekennzeichnet, dass** die Vorrichtung eine chemische Überwachungseinheit (7) umfasst.

2. Vorrichtung nach Anspruch 1, **dadurch gekennzeichnet, dass** die chemische Überwachungseinheit (7) mindestens einen Sensor (9) zur Konzentrationsmessung einer Leitsubstanz aufweist.

3. Vorrichtung nach Anspruch 2, **dadurch gekennzeichnet, dass** der oder die Sensoren (9) Sensoren für den Gehalt an Kohlenwasserstoffen sind.

4. Vorrichtung nach einem der vomergehenden Ansprüche, **dadurch gekennzeichnet, dass** ein Sensor (9) in Luftströmungsrichtung gesehen vor dem Filter (3) und ein Sensor (9) in Luftströmungsrichtung gesehen nach dem Filter (3) angeordnet ist.

5. Vorrichtung nach einem der Ansprüche 1 bis 3, **dadurch gekennzeichnet, dass** ein Sensor (9) vorgesehen ist, dem Luft aus dem Luftkanal (2) von vor und nach dem Filter (3) getrennt und/oder abwechselnd zuführbar ist.

6. Vorrichtung nach einem der vorhergehenden Ansprüche, **dadurch gekennzeichnet, dass** die Vorrichtung (10) den in dem Luftkanal (2) angeordneten Filter (3) sowie eine physikalische Überwachungseinheit (4) und eine chemisch Überwachungseinheit (7), welche mindestens einen Sensor (9) zur Konzentrationsmessung einer Leitsubstanz, sowie mindestens eine Auswerteelektronik (6) für die Überwachungseinheiten (4, 7) aufweist, umfasst.

7. Vorrichtung nach Anspruch 6, **dadurch gekennzeichnet, dass** die physikalische Überwachungseinheit (4) eine Strömungsgeschwindigkeit der Luft im Luftkanal (2) nach dem Filter (3) und/oder eine Druckdifferenz zwischen einem Punkt vor dem Filter (3) und einem Punkt hinter dem Filter (3) überwacht.

8. Vorrichtung nach Anspruch 6 oder 7, **dadurch gekennzeichnet, dass** eine Entnahme- oder Messstelle (8) für die chemische Überwachungseinheit (7) im Frischluftkanal (2') und/oder im Luftkanal (2) nach einem Gebläse (G) und vor dem Filter (3) angeordnet ist.

9. Vorrichtung nach einem der Ansprüche 6 bis 8, **dadurch gekennzeichnet, dass** eine Entnahme- oder Messstelle (8) für die chemische Überwachungseinheit (7) nach dem Filter (3) zwischen zwei Messstellen (5) zur Ermittlung der Strömungsgeschwindigkeit der Luft im Luftkanal (2) angeordnet ist.

10. Vorrichtung nach einem der vorhergehenden Ansprüche, **dadurch gekennzeichnet, dass** Entnahme- oder Messstellen (8) für den Sensor (9) zur Konzentrationsmessung einer Leitsubstanz an, in Luftströmungsrichtung hintereinander liegenden Stellen angeordnet.

11. Vorrichtung nach einem der vorhergehenden Ansprüchen; **dadurch gekennzeichnet, dass** zumindest eine nach dem Filter (3) angeordnete Entnahme- oder Messstelle (8) für den Sensor (9) zur Konzentrationsmessung einer Leitsubstanz nach außen versetzt im Luftkanal (2) angeordnet ist.

12. Vorrichtung nach einem der vorhergehenden Ansprüche, **dadurch gekennzeichnet, dass** eine Messstelle (5) zur Ermittlung der Strömungsgeschwindigkeit der Luft im Luftkanal (2) mittig und eine zweite Messstelle (5) zur Ermittlung der Strömungsgeschwindigkeit der Luft im Luftkanal (2) nach außen versetzt angeordnet ist.

13. Vorrichtung nach einem der vorhergehenden Ansprüche, **dadurch gekennzeichnet, dass** genau eine Auswerteelektronik (6) für die physikalische Überwachungseinheit (4) und die zweite, chemische Überwachungseinheit (7) zusammen vorgesehen ist.

14. Vorrichtung nach einem der vorhergehenden Ansprüche, **dadurch gekennzeichnet, dass** der Filter (3) einen Partikelfilter (3') und einen Aktivkohle-Filter (3") aufweist.

15. Belüftungs-, Heizungs- und/oder Klimaanlage für ein Kraftfahrzeug, **dadurch gekennzeichnet, dass** die Belüftungs-, Heizungs- und/oder Klimaanlage eine Vorrichtung nach einem der Ansprüche 1 bis 14 aufweist.

16. Belüftungs-, Heizungs- und/oder Klimaanlage für ein Kraftfahrzeug nach Anspruch 15, **dadurch gekennzeichnet, dass** die Belüftungs-, Heizungs- und/oder Klimaanlage zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

17. Verfahren zur Überwachung eines Filters (3) mit einer Vorrichtung nach einem der Ansprüche 1 bis 14, wobei mindestens ein Sensor (9) der chemischen Überwachungseinheit (7) Konzentration einer Leitsubstanz ermittelt und die Messwerte an eine Auswerteelektronik (6) weiterleitet.

18. Verfahren nach Anspruch 17, **dadurch gekennzeichnet, dass** die gemessenen Konzentrationen der Leitsubstanz in einer Auswerteelektronik (5) verglichen werden.

19. Verfahren nach Anspruch 17 oder 18, **dadurch gekennzeichnet, dass** der Kohlenwasserstoff-Gehalt der Luft vor und nach dem Filter (3) mit dem oder den Sensoren (4) gemessen wird.

20. Verfahren nach einem der Ansprüche 17 bis 19, **dadurch gekennzeichnet, dass** Luft aus dem Luftkanal (2) von vor dem Filter (3) und nach dem Filter (3) abwechselnd über einen Bypass oder Leitungen (11) zum Sensor (9), welcher den chemischen Messwert ermittelt, geführt wird.

21. Verfahren nach einem der Ansprüche 17 bis 20, **dadurch gekennzeichnet, dass** neben einer chemischen Überwachung der Konzentration der Leitsubstanz auch eine physikalische Überwachung mit Hilfe einer physikalischen Überwachungseinheit (4) erfolgt.
